Europäisches Patentamt

European Patent Office

Office européen des brevets

(11) Veröffentlichungsnummer: **0 395 836**
**A1**

## (12) EUROPÄISCHE PATENTANMELDUNG

(21) Anmeldenummer: **90101557.8**

(22) Anmeldetag: **26.01.90**

(51) Int. Cl.5: **E02D 31/00, E02D 31/04**

(30) Priorität: **05.05.89 DE 3914782**

(43) Veröffentlichungstag der Anmeldung:
**07.11.90 Patentblatt 90/45**

(84) Benannte Vertragsstaaten:
**AT BE CH DE DK ES FR GB GR IT LI NL SE**

(71) Anmelder: **Niederberg-Chemie GmbH**
**Postfach 11 63**
**D-4133 Neukirchen-Vluyn(DE)**

(72) Erfinder: **Schlütter, Aloys**
**Rheinstrasse 42**
**D-4152 Kempen 3(DE)**
Erfinder: **Mooren, Heiner**
**Kettelerstrasse 14**
**D-4054 Nettetal 1(DE)**

(54) **Kunststoffabdichtungsbahnen.**

(57) Nach der Erfindung werden Schweißflächen an Abdichtungsbahnen (1) mit Abdeckungs- und Schutzstreifen (2) gegen Verschmutzung gesichert, welche ohne Klebemittel an der Abdichtungsbahn (1) verklebt werden.

Xerox Copy Centre

# Kunststoffabdichtungsbahnen

Die Erfindung betrifft Kunststoffabdichtungsbahnen, insbesondere für Deponiebasisabdichtungen, die überlappend verlegt und an den Rändern miteinander verschweißt werden.

Beim Verschweißen von Kunststoffabdichtungsbahnen werden die Schweißflächen plastifiziert und anschließend gegeneinandergedrückt. Dazu sind verschiedene Schweißverfahren bekannt. Dazu gehören das Heizkeilschweißen, das Heißluftschweißen und das Ultraschallschweißen. Beim Heizkeilschweißen werden die Schweißflächen durch Berührung mit einem zwischen den Schweißflächen geführten heißen Keil plastifiziert. Beim Heißluftschweißen wird Heißluft zur Plastifizierung der Schweißflächen zwischen die Schweißflächen gelenkt. Beim Ultraschallschweißen ist die Einwirkung von Ultraschall, vorzugsweise zusammen mit einem oszillierend zwischen den Schweißflächen bewegten Keil vorgesehen.

Für alle Schweißverfahren ist wichtig, daß die Schweißflächen sauber sind. Das gilt besonders für das Heizkeilschweißen und das Ultraschallschweißen. Beim Heißluftschweißen trägt der Luftstrom zur Säuberung der Schweißflächen bei.

Das Sauberhalten von Schweißflächen ist besonders bei der Herstellung von Deponieabdichtungen problematisch. Üblicherweise werden die Abdichtungsbahnen nämlich unmittelbar auf einer Mineralschicht verlegt. Diese Mineralschicht setzt Partikel frei, die auf die Schweißflächen gelangen. Je nach Feuchtigkeitsverhältnissen und Windverhältnissen kann das dazu führen, daß beim Verlegen und Schweißen einer Deponieabdichtung ein Mann der Verlegekolonne vorlaufend zum Schweißgerät die Schweißflächen säubern muß.

Der Erfindung liegt die Aufgabe zugrunde, eine Verschmutzung der Schweißflächen zu vermeiden und dabei geht die Erfindung von der Überlegung aus, die Schweißflächen solange abzudecken, bis die Schweißung erfolgt. An sich bieten sich zur Abdeckung Klebebänder an. Dabei handelt es sich um Materialbänder, die einseitig selbstklebend ausgelegt sind. In jedem Fall besitzen diese Klebebänder Klebeschichten 1, die beim Abnehmen der Bänder teilweise auf den Schweißflächen verbleiben würden. Die Klebeschichten sind für den Schweißvorgang äußerst hinderlich. Insofern scheiden Klebebänder an sich aus. Nach der Erfindung wird gleichwohl an Klebebändern festgehalten. Nach der Erfindung erfolgt eine Warmklebung ohne Klebemittel. Die erfindungsgemäße Warmklebung sieht eine geringfügige Erwärmung der Berührungsfläche des Abdeckungsbandes und der zugehörenden Schweißfläche der Abdichtungsbahn sowie eine Anpassung des Abdeckungsstreifens bzw.

Schutzstreifens vor. Dadurch legt sich der Abdeckungs- und Schutzstreifen schließend auf die Schweißfläche der Abdichtungsbahn und haftet dort. Die Haftung kann durch Wahl der Erwärmung und des Anpressdruckes so eingestellt werden, daß einerseits ein selbsttätiges Ablösen ausgeschlossen ist und andererseits jedoch ein relativ geringer Ablösewiderstand gegeben ist, der das Ablösen vor dem Schweißen erleichtert und ausschließt, daß störende Partikel auf der Schweißfläche haften bleiben.

In weiterer Ausbildung nach der Erfindung sind für Abdichtungsbahnen aus ECB (ethylencopolymerhaltige Bitumenmischung) und PE (Polyethylen) Abdeckungs- und Schutzstreifen aus EVA- (Ethylenvenylacetat) Folien vorgesehen. Die erfindungsgemäßen Abdeckungs- und Schutzstreifen werden auf eine Temperatur von 50 bis 120 °C erwärmt und bei Anpressrollendurchmessern von 50 bis 200 mm mit 3 bis 8 kg/cm Liniendruck angedrückt.

Für die Abdeckungs- und Schutzstreifen reicht üblicherweise eine Dicke von 20 bis 120 μ (0,02 bis 0,12 mm) und eine Breite von 80 bis 150 mm aus.

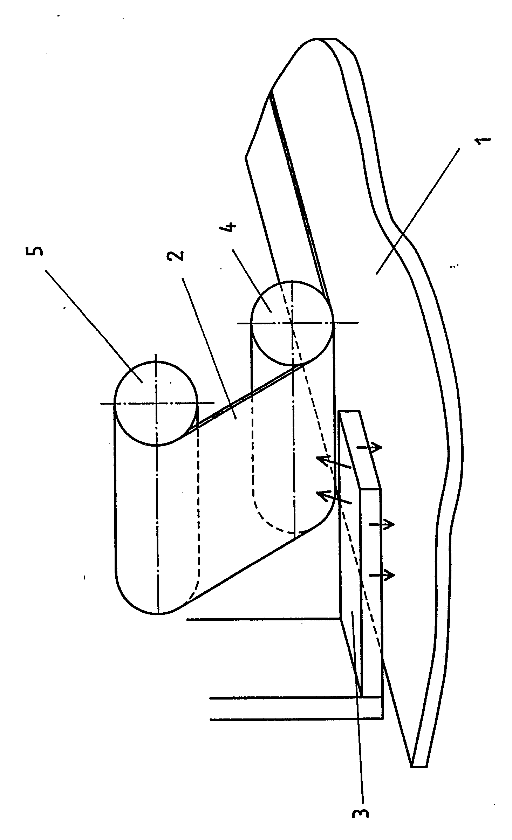

In der Zeichnung ist ein Ausführungsbeispiel der Erfindung dargestellt.

Mit 1 ist eine Abdichtungsbahn aus HDPE bezeichnet. Die Abdichtungsbahn hat eine Dicke von 3 mm. Am Rand der Abdichtungsbahn 1 wird eine Folie 2 von 100 mm Breite und 60 Dicke geklebt. Der Klebung geht eine Erwärmung der Berührungsflächen voraus. Die Erwärmung erfolgt über eine Heißluftdüse 3. Die Heißluft wird mit einer Temperatur von 100 °C sowohl gegen die Abdichtungsbahn als auch gegen die Folie 2 gelenkt.

Nach der Erwärmung wird die Folie 2 von einer Andruckrolle 4, welche einen Durchmesser von 100 mm besitzt, mit einem Liniendruck von 5 kg/cm Folienbreite gegen die Abdichtungsbahn 1 gedrückt. Dadurch haftet die Folie 2 am Rand der Abdichtungsbahn.

Die Folie 2 wird von einer Vorwärtsrolle 5 gezogen.

## Ansprüche

1. Kunststoffabdichtungsbahnen, insbesondere für Deponiebasisabdichtungen, die überlappend verlegt und an den Rändern miteinander verschweißt werden, gekennzeichnet durch Schutzstreifen (2) auf den Schweißflächen, die warm und ohne Klebemittel geklebt sind.

2. Kunststoffabdichtungsbahnen nach Anspruch 1, gekennzeichnet durch EVA-Folien für Abdichtungsbahnen aus ECB und PE, wobei die Erwärmungstemperatur 50 bis 120 °C und der Anpressdruck in Form eines Liniendruckes bei einem Durchmesser von 50 bis 200 mm der Anpressrolle (4) 3 bis 8 kg/cm beträgt.

3. Kunststoffabdichtungsbahnen nach Anspruch 1 und 2, gekennzeichnet durch Folienbreiten von 80 bis 150 mm und Foliendicken von 20 bis 120 μ.

# EUROPÄISCHER RECHERCHENBERICHT

Europäisches Patentamt

## EINSCHLÄGIGE DOKUMENTE

EP 90101557.8

| Kategorie | Kennzeichnung des Dokuments mit Angabe, soweit erforderlich. der maßgeblichen Teile | Betrifft Anspruch | KLASSIFIKATION DER ANMELDUNG (Int Cl⁵) |
|---|---|---|---|
| Y | DE - A1 - 3 514 383 (DÖRKEN GMBH & CO KG) * Zusammenfassung; Seiten 13-15; Fig. 1,2,5 * | 1 | E 02 D 31/00 E 02 D 31/04 |
| A | -- | 2 | |
| Y | DE - A1 - 3 017 174 (HEYEN) * Gesamt * | 1 | |
| A | -- | 2 | |
| A | US - A - 4 787 780 (HARRIETT) * Zusammenfassung; Spalte 10, Zeilen 60-66; Spalte 12; Ansprüche 1-4; Fig. 3 * | 1-3 | |
| A | -- FR - A1 - 2 597 523 (RODIO FOUNDATION ENGINEE-RING LTD) * Zusammenfassung; Ansprüche; Fig. 4,5 * | 1,2 | |
| A | -- DE - A1 - 3 317 984 (DYNAMIT NOBEL AG) * Zusammenfassung; Ansprüche; Seite 9, Zeilen 16-19; Fig. 1 * ---- | 1,2 | |

RECHERCHIERTE SACHGEBIETE (Int Cl⁵)

B 09 B
E 02 B
E 02 D

Der vorliegende Recherchenbericht wurde für alle Patentansprüche erstellt.

| Recherchenort | Abschlußdatum der Recherche | Prüfer |
|---|---|---|
| WIEN | 25-06-1990 | LANG |